# EUROPEAN PATENT APPLICATION

(11) **EP 1 147 799 A1**
(43) Date of publication of application: **24.10.2001**
(21) Application number: 00201388.6
(22) Date of filing: 17.04.2000
(51) Int. Cl.: B01D 45/12, B04C 3/00

(54) **Device to remove liquid from a gas/liquid mixture**

(71) Applicant: Koene, Fredéric Pierre Joseph, 6866 BZ Heelsum (NL)
(72) Inventor: Koene, Fredéric Pierre Joseph, 6866 BZ Heelsum (NL); Bos, Adriaan, 2253 BS Voorschoten (NL)
(74) Representative: Prins, Adrianus Willem

(57) **Abstract**

Device for the removal of a liquid from a gas/liquid mixture, comprising a tube, a swirl body placed in this tube and having one or more swirling members, at least one outflow opening in the wall of the tube downstream of the swirl body, a channel connected with a downstream end to an upstream end of an internal channel in the swirl body, an upstream end of the channel being in fluid communication with the at least one outflow opening in the tube, the internal channel in the swirl body having at least one outflow opening, characterized in that the at least one outflow opening of the internal channel is situated at a position upstream from a downstream end of the swirl body.

## Description

The invention relates to a device for the removal of a liquid from a gas/liquid mixture, comprising a tube, a swirl body placed in this tube and having one or more swirling members, at least one outflow opening in the wall of the tube downstream of the swirl body, a channel connected with a downstream end to the upstream end of an internal channel in the swirl body, an upstream end of the channel being in fluid communication with the at least one outflow opening in the tube, the internal channel in the swirl body having at least one outflow opening.

Such a device is known from NL-1003408.

In the oil and petrochemical industry there are many processes which require in a certain stage the removal of liquid from the gas flows processed.

For example, if the pressure of natural gas produced at a offshore platform, for instance, has to be increased, a compressor is required which is mostly of the centrifugal type. In order to avoid breakdown of the vanes of this type of compressor, it is essential to remove the liquid present in the natural gas before the gas enters the compressor. Normally this gas/liquid separation is achieved by the installation of a gas scrubber or gas/liquid separator upstream of the compressor. In this gasscrubber or gas/liquid separator a or a number of internal devices is present which perform the gas/liquid separation. This internal device can be one or a combination of the following types:
- wiremesh-type, comprising several layers of knitted thin wiremesh
- vane-type comprising a number of parallel zigzag plates
- cyclone-type either as mono-cyclone or as a multicyclone bundle.

In particular in the offshore industry there is a need of very compact separators in view of the limited space available at the production platforms for which also compact gas/liquid separation internals are required.

Of the internals mentioned above the cyclone-type internals are the most compact internals and are therefore preferably used in the offshore industry in particular when the gas pressure is high.

In most cases then a multicyclone bundle is used consisting of a number of axial-flow cyclones because of the relatively low pressure drop across this type of cyclones.

The device mentioned in the preamble of claim 1 is such an axial flow cyclone. The main elements of the axial flow cyclone are a cyclone tube and a swirl body inside the tube. The gas flows through these cyclones and the swirling members or vanes of the swirl body in the cyclone tube bring the gas flow into a swirling motion which causes the liquid droplets present in the gas to migrate to the tube wall due to the centrifugal forces generated by this swirling motion. Eventually, the droplets will be caught by the tube wall and will form a liquid film which will spiral upwards on the inner tube wall. In order to transport this separated-off liquid to a liquid collection chamber of the multicyclonebundle and eventually via a liquid drain to the liquid compartment of the gas/liquid separation vessel, outflow openings in the form of slots are present in the tube wall.

These slots are in most cases longitudinal, i.e. parallel to the axis of the cyclone tube.

In order to achieve an efficient removal of the separated-off liquid from the tube, a part of the gas flow through the cyclone, typically ranging from 5 to 20 % of the total flow leaves the cyclone tube via the slots. If this so-called secondary flow is not present, then there is a high risk that the separated-off liquid remains at the side of the slots due to the surface effects and creeps along these rims to the gas exit due to the drag force exerted by the gas flow and will eventually be re-entrained in the primary gas flow.

The introduction of this secondary gas flow, however, creates a new problem because this secondary gas contains liquid droplets which have been picked up at the location of the slots, for instance, and which also have to be removed.

It is known from patent publications and from the open literature that there are several methods in use to solve this problem.

One method is to allow the secondary gas flow to leave the liquid collection chamber via secondary gas outlets at the top of the chamber and having the liquid collection chamber dimensioned such that the upward velocity of the secondary gas is sufficiently low to enable the dropout of the droplets from the gas flow by gravity. In case that the droplets to be removed are very small, a wiremesh can be installed downstream of the secondary gas outlets to ensure also the removal of these small droplets.

An alternative method is to recirculate the secondary gas to the cyclone where it flows via a pipe in the tube through the swirl body and leaving the swirl body via a top outlet. There the secondary gas flow is re-united with the main gas flow in the cyclone.

This recirculation flow is driven by the underpressure on the central axis of the cyclone created by the swirling flow.

In order to prevent liquid re-entrainment of liquid present at the swirl body into the secondary gas leaving the swirl body, the top of the swirl body has to be fitted with anti-creep rings. This is disclosed in patent publication NL-1003408 and in the Ph D thesis of the person mentioned as inventor in the Dutch application.

The disadvantage of the recirculation with a top outlet in the swirl is that the secondary gas enters the tube as a jet stream in which no or virtually no swirl is present. Consequently, a proper demisting of the secondary gas is not achieved and the liquid removal efficiency of the cyclones is adversely affected and the performance of a recirculation axial cyclone with a secondary gas outlet at the top of the swirl body and anti-creep rings is poor.

The object of the invention is to provide a recirculation axial cyclone with a much higher performance.

According to the invention this object is achieved by a device for the removal of a liquid from a gas/liquid mixture, comprising a tube, a swirl body placed in this tube and having one or more swirling members, at least one outflow opening in the wall of the tube downstream of the swirl body, a channel connected with a downstream end to an upstream end of an internal channel in the swirl body, an upstream end of the channel being in fluid communication with the at least one outflow opening in the tube, the internal channel in the swirl body having at least one outflow opening, wherein the at least one outflow opening of the internal channel is situated at a position upstream from a downstream end of the swirl body.

Because of the fact that the at least one outflow opening of the internal channel is situated at a position upstream from a downstream end of the swirl body, there is a full benefit of the swirl created by the swirl body resulting in an efficient demisting of the secondary gas. The secondary gas is introduced at a position in the primary gas flow where the swirling motion very intense. As a consequence, the secondary and primary gas flows will mix very quickly and the liquid which is present in the secondary gas flow will be seperated from the gas flow.

Furthermore, the anti-creep rings have become obsolete which is an advantage because of the smaller flow resistance in the tube when no anti-creep rings are present.

Another advantage is that the secondary gas flow will not form a gas jet in the tube which does not have a swirling motion. In the prior art device, this gas jet causes the problem of liquid leaving the tube via the primary gas outlet.

According to a further elaboration of the invention, the at least one outlet opening of the internal channel is situated downstream of the downstream ends of the swirling members, wherein the distance between an upstream side of the at least one outflow opening of the inner channel and a downstream end of the swirling members is less than the distance between the downstream ends of two neighbouring swirling members. According to this further elaboration the secondary gas will enter the primary gas at a point where the swirling motion in the primary gas is very strong. Consequently, the secondary gas will almost immediately come into a swirling motion and the liquid therein will migrate to the tube wall.

In an alternative further elaboration of the invention this effect can be achieved by situating the at least one outflow opening of the internal channel between the swirling members of the swirl body, preferably near a downstream end of the swirling members.

Further elaborations of the invention are described in the sub claims and will be further elucidated in the following with reference to the drawing in which:

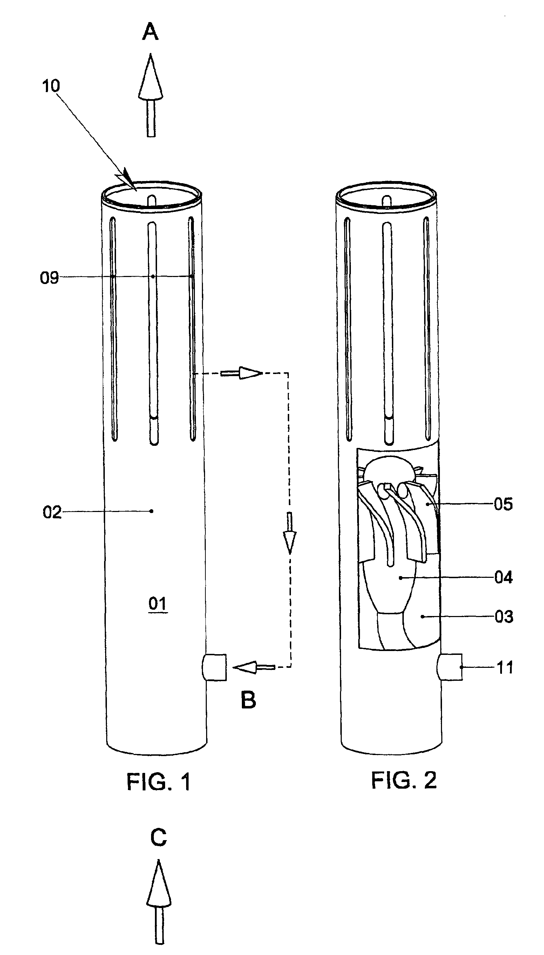

figure 1 shows a perspective view of an embodiment the device;
figure 2 shows a partly broken away over-all view of the cyclone;

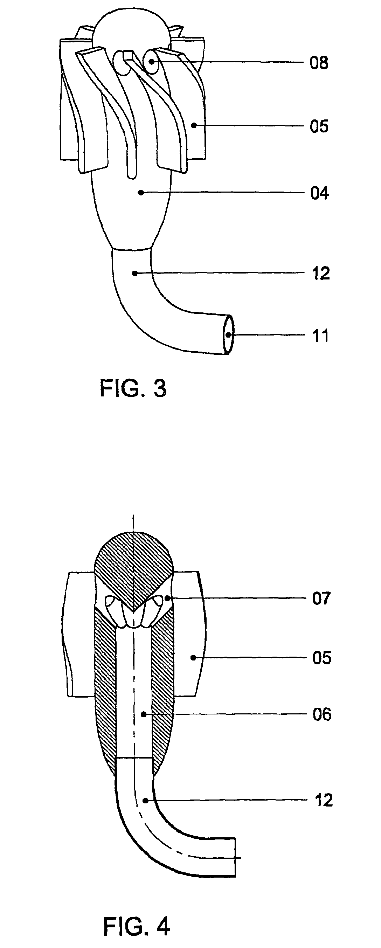

figure 3 shows a detail of the downstream end of the swirl body; and
figure 4 shows a longitudinal cross section of the swirl body of the device.

A device 1 comprise a tube having cylindrical wall 2 which bounds a flow space 3. Placed in flow space 3 is a swirl body 4 which is provided on the outer periphery with swirling members in the form of curved swirling blades 5. Arranged in the interior of the swirl body 4 is an internal channel 6. The upper part of this channel branches off into a number of branch channels 7. The branch channels 7 extend in a direction which direction makes an angle with the longitudinal axis of the tube which is smaller than 90 degrees, so that, in use the change of direction of the gasflow when leaving the central channel and entering the branch channels is less than 90 degrees, preferably in the range of 30 to 45 degrees. In the present embodiment, the openings 8 of the branch channels are situated in the downstream end of the space between the swirling blades 5 on the swirl body 4. Between each pair of swirling blades 5 an outflow opening 8 of the internal channel 6 is provided. In an alternative embodiment of the invention, the outflow openings 8 of the branch channels 7 of the internal channel 6 may also be situated a little downstream of the downstream ends of the swirling blades 5. Downstream of the swirling body 4, the tube 2 is provided with elongated longitudinal slots 9. Device 1 is surrounded by liquid collection chamber (not shown in the figure).

During operation of the device 1 a mist of gas and liquid (droplets) is supplied in the direction of arrow C into the flow space 3, whereafter this gas flow acquires a cyclone-like flow pattern due to the swirling blades 5. Due the centrifugal force the liquid droplets are moved at least to a considerable extend radially out of the gas flow via the longitudinal slots 9 in the direction of arrows B, together with a fraction of the quantity of gas, the secondary gas, typically in the range of 5 to 20% of the total gas flow through the cyclone, whilst the remaining gas flow with at least a large part of the liquid removed leaves device 1 in the direction of arrow A via outlet opening 10. Secondary gas flows B are fed back via the liquid collection chamber (not shown) to a secondary gas inlet 11 which connects onto a channel 12 to the internal channel 6 in the swirl body 4.

This secondary gas flow in the direction of B serves to increase the removal efficiency of the separated-off liquid from device 1 into the liquid collection chamber and also to prevent fouling/blocking of the elongated longitudinal slots 9 due to solid particles originating from the gas.

Owing to the swirling action of the blades 6 a relatively low pressure is created along the centre line of device 1 downstream of swirl body 4 and also at the openings 8. This underpressure sucks the fed back gas into channel 6 via secondary inlet 11 and channel 12.

At the end of internal channel 6, the secondary flow is divided over the branch channels 7 and leaves the swirl body 4 between the upper part of the blades 5 via the branch channel openings 8.

There it is re-united with the main gas flow in device 1 which flow is having locally its maximum swirl. Due to this, the secondary flow also starts swirling resulting in a removal of the liquid droplets still entrained in the secondary flow.

The cyclone configuration according to the present invention causes only a very low pressure drop in the flow of the gas flow, which is typically in the order of 30 mbar.

It has a very high liquid removal efficiency which is rather insensitive to large variations in the gas flow. Further, the manufacturing costs according to the present invention can be relatively low.

The present invention is not limited to the above described preferred embodiment thereof; the rights applied for are defined by the following claims.

## Claims

1. Device for the removal of a liquid from a gas/liquid mixture, comprising a tube, a swirl body placed in this tube and having one or more swirling members, at least one outflow opening in the wall of the tube downstream of the swirl body, a channel connected with a downstream end to an upstream end of an internal channel in the swirl body, an upstream end of the channel being in fluid communication with the at least one outflow opening in the tube, the internal channel in the swirl body having at least one outflow opening, **characterized in that** the at least one outflow opening of the internal channel is situated at a position upstream from a downstream end of the swirl body.

2. Device according to claim 1, **characterized in that** the at least one outlet opening of the internal channel is situated downstream of the downstream ends of the swirling members, wherein the distance between an upstream side of the at least one outflow opening of the inner channel and a downstream end of the swirling members is less than the distance between the downstream ends of two neighbouring swirling members.

3. Device according to claim 1, **characterized in that** the at least one outflow opening of the internal channel is situated between the swirling members of the swirl body.

4. Device according to claim 3, **characterized in that** the at least one outflow opening of the internal channel is situated between the swirling members near a downstream end of the swirling members.

5. Device according to claim 3 or 4, **characterized in that** between each pair of swirling members an outflow opening of the internal channel is situated.

6. Device according to any of claims 1-5, **characterized in that** the internal channel of swirl body comprises a central channel and a number of branch channels which branch off the central channel, each branch channel ending into a said outflow opening of the internal channel.

7. Device according to claim 6, **characterized in that** the branch channels extend in a direction which direction makes an angle with the longitudinal axis of the tube which is smaller than 90 degrees, so that, in use the change of direction of the gasflow when leaving the central channel and entering the branch channels is less than 90 degrees.

8. Device according to claim 7, **characterized in that** the said angle is in the range of 30 to 45 degrees.

9. Device according to any of claims 1-8, **characterized in that** the at least one outflow opening in the wall of the tube downstream of the swirl body are a number of longitudinal slots.
